# EUROPÄISCHE PATENTSCHRIFT

(11) **EP 1 404 547 B1**
(45) Veröffentlichungstag und Bekanntmachung des Hinweises auf die Patenterteilung: **23.11.2005**
(21) Anmeldenummer: 02750825.8
(22) Anmeldetag: 03.07.2002
(51) Int. Cl.: B60R 21/01

(54) **VERFAHREN UND VORRICHTUNG ZUR OPTISCHEN ERKENNUNG DES ÖFFNUNGSZUSTANDES EINER FAHRZEUGTÜR**
METHOD AND DEVICE FOR OPTICALLY DETECTING THE OPEN STATE OF A VEHICLE DOOR
PROCEDE ET DISPOSITIF DE DETECTION OPTIQUE DE L'ETAT OUVERT D'UNE PORTE DE VEHICULE

(30) Priorität: 10.07.2001 DE 10133511
(43) Veröffentlichungstag der Anmeldung: 07.04.2004
(73) Patentinhaber: SIEMENS AKTIENGESELLSCHAFT, 80333 München (DE)
(72) Erfinder: ERTL, Ludwig, 93057 Regensburg (DE); KÖHLER, Thorsten, 93180 Deuerling (DE); RÖSL, Reinhard, 93170 Bernhardswald (DE); ZITTLAU, Dirk, 92348 Berg (DE)
(86) Internationale Anmeldenummer: PCT/DE2002/002423
(87) Internationale Veröffentlichungsnummer: WO 2003/006278

(56) Entgegenhaltungen:
- WO-A-00/65538
- US-A- 5 835 613

## Beschreibung

Die Erfindung bezieht sich auf ein Verfahren zur Ermittlung der Position eines Objekts innerhalb eines mit einer Tür ausgestatteten Fahrzeuginnenraums, bei dem eine Bildfolge mit einer Kamera aufgenommen wird und durch elektronische Auswertung der Bilder der Bildfolge die aktuelle Position des Objekts berechnet wird, wobei durch Vergleich eines aktuell aufgenommenen Bildes mit einem vorher gespeicherten Bild ein Differenzbild erzeugt wird und die Berechnung der Position des Objekts auf der Basis des Differenzbilds erfolgt.

Ein derartiges Verfahren ist beispielweise aus der WO 00 65538 sowie der US 5,835, 613 bekannt. Bei den bekannten Verfahren wird ein Differenzbild erzeugt, in dem die Kontur des hinsichtlich seiner Position zu ermittelnden Objektes nur bei einer Bewegung des Objektes erscheint. Dabei werden in einer Szene automatisch nur die sich bewegenden Objekte erfasst, was eine einfache und sichere Bildauswertung ermöglicht. Zur Bilderfassung dient eine CCD- oder eine CMOS-Kamera, die mit einem Weitwinkelobjektiv ausgestattet und im Fahrzeuginnenraum möglichst hoch angebracht ist, bevorzugt am Dachhimmel des Fahrzeugs.

Die Kamera oder ein anderes optisches Sensorsystem kann zwischen den Vordersitzen angeordnet sein, dann überdeckt es mit seinem Blickwinkel den Bereich zwischen dem Armaturenbrett und der Sitzlehne sowie zwischen Dachhimmel und Sitzkissen.

Das bekannte Verfahren wird dazu eingesetzt, Informationen über die Position des Beifahrers, insbesondere seines Kopfes, innerhalb des Fahrzeuginnenraums sicher zu ermitteln und diese Informationen für die Auslösung eines Airbag-Systems einzusetzen.

Andererseits ist es bekannt, auch einen Türkontakt des Fahrzeugs auszulesen, um diese Information für die Überwachung des Airbag-Systems auszuwerten. Eine Überwachungseinrichtung klassifiziert die Belegung eines Fahrzeugsitzes, insbesondere des Beifahrersitzes, in verschiedene, mögliche Belegungsklassen (leerer Sitz; Kindersitz, rückwärts gerichtet; Kindersitz vorwärts gerichtet; erwachsene Person) und lässt mit bestimmten Übergangswahrscheinlichkeiten Übergänge zwischen diesen Belegungsklassen zu. Solange die Fahrzeugtür geöffnet ist, soll jedoch das Airbag-System nicht aktiviert sein. Deswegen erzeugt ein beispielsweise mechanischer Türkontakt des Fahrzeugs ein Signal, das dem Überwachungssystem zugeführt wird. Dazu ist eine elektrische Leitung vom Türkontakt bis zum Kamera- oder Sensorsystem am Dachhimmel vorhanden.

Ein Kabel hat jedoch den Nachteil, dass seine Verlegung mit Aufwand verbunden ist. Ein langes Kabel bringt zusätzliche EMV-Probleme (EMV = elektromotorische Verträglichkeit) mit sich. Der zumeist billige Türkontakt des Fahrzeugs wird zu einem sicherheitsrelevanten Teil, weil er die Auslösung des Airbags beeinflusst.

Es ist die Aufgabe der Erfindung, ein Verfahren zur sicheren Erkennung der Fahrzeugtür zu schaffen.

Erfindungsgemäß wird die Aufgabe bei einem Verfahren der eingangs genannten Art dadurch gelöst, dass die Kamera Bilder der Tür aufnimmt, dass die Bilder der Tür ausgewertet werden und dass auf Basis des Differenzbildes zwischen dem geschlossenen Zustand und dem geöffneten Zustand der Öffnungszustand der Tür gewonnen wird.

Vorteilhafte Weiterbildungen ergeben sich aus den Unteransprüchen.

Insbesondere lässt sich das Verfahren dazu ausnutzen, neben der Feststellung des Öffnungszustandes den konkreten Öffnungswinkel der Tür aus dem Differenzbild zu gewinnen. Dieser lasst sich verwerten, um beim Abstellen des Fahrzeugs auf einem Parkplatz ein zu weites Öffnen der Fahrzeugtür zu verhindern, wodurch diese oder Karosserieteile eines benachbarten Fahrzeugs oder andere benachbarte Objekte beschädigt werden kannten.

In vorteilhafter Weise wird das Verfahren der Differenzbildgewinnung in Verbindung mit einem Überwachungssystem eingesetzt. Dabei erzeugt die Kamera in Abhängigkeit vom erkannten Öffnungszustand ein Signal und führt dieses einem Überwachungssystem zu, das aufgrund des Signals eine Sicherheitseinrichtung zum Schutz von Fahrzeuginsassen ein- oder ausschaltet. Hierdurch lassen sich die Nachteile eines mit einer elektrischen Leitung verbundenen Türkontaktes vermeiden.

Zusätzlich oder alternativ lässt sich das erfindungsgemäße Verfahren einsetzen, um den Öffnungszustand eines Fensters zu messen. Dabei erzeugt die Kamera in Abhängigkeit vom erkannten Öffnungszustand ein Signal und führt dieses einem Überwachungssystem zu. Dadurch kann verhindert werden, dass der Arm oder Kopf eines sich aus dem Fenster hinauslehnenden Beifahrers durch einen motorischen Fensterheber eingeklemmt oder verletzt werden oder dass ein Gegenstand durch das hochfahrende Fenster eingeklemmt oder beschädigt wird. Voraussetzung hierfür ist jedoch, dass die gefährdeten Körperteile des Beifahrers oder das Objekt nicht verdeckt werden, beispielsweise durch den Rumpfkörper des Beifahrers.

Die Kamera gibt, wenn sie ein Objekt im Bereich des geöffneten Fensters erkennt, ein Signal an das Überwachungssystem ab, aufgrund dessen das Überwachungssystem eine Sperre initialisiert, die ein Verschließen des geöffneten Fensters verhindert.

Als besonders geeignetes Verfahren zur Auswertung von Öffnungszuständen der Fahrzeugtür oder eines Fensters erweist sich die Auswertung von Grauwertbildern.

Um mit wenigen Grauwertbildern zu einer Entscheidung über den Öffnungszustand der Tür bzw. des Fensters zu gelangen, werden für die Gewinnung der Grauwertbilder virtuelle Bildbereiche festgelegt, in denen bei Änderung des Öffnungszustandes der Tür bzw. des Fensters Änderungen der Grauwerte erwartet werden.

Um bei der Auswertung der Grauwertbilder möglichst wenig Speicherplatz in einem Datenspeicher einsetzen zu müssen, wird je gewonnenes Bild eine Grauwertkurve als Funktion des Ortes nach dem Ort differenziert. Das Ergebnis der Differentiation wird jeweils gespeichert und aus dem Vergleich der gespeicherten Daten der Öffnungszustand ermittelt.

Alternativ zur Gewinnung von Grauwertbildern werden mit einer 3D-Kamera dreidimensionale Entfernungsbilder aufgezeichnet, um daraus den Öffnungszustand der Tür bzw. des Fensters zu gewinnen. Hierbei werden Messfelder verwendet, deren mittlerer Abstand zu der Kamera gemessen wird.

In einem weiteren Verfahren werden sämtliche Entfernungspunkte nach Transformation in das Fahrzeugsystem auf eine Ebene parallel zum Fahrzeugboden projiziert. Dann werden die projizierten Bilder jeweils gespeichert und aus dem Vergleich der gespeicherten Daten wird der Öffnungszustand ermittelt. Hierbei werden charakteristische Punktwolken ermittelt. Bei Öffnung der Tür ändert sich die Position der zugehörigen Punktwolke.

Die vorliegende Erfindung eignet sich insb. für im Fahrzeugimmenraum angeordet Vorrichtungen mit einer Kamera zur Durchführung eines Verfahrens, wie oben beschrieben.

Nachstehend wird die Erfindung in Ausführungsbeispielen anhand der Zeichnungen näher erläutert. Diese zeigen:
- Fig. 1: einen Querschnitt durch ein Fahrzeug quer zur Fahrrichtung mit Draufsicht auf den Beifahrersitz,
- Fig. 2a, b: einen zum Fahrzeugboden koplanaren Querschnitt mit Draufsicht auf den Beifahrersitz bei geschlossener und geöffneter Tür,
- Fig. 3a, b: eine Draufsicht auf die Beifahrertür von innen mit Kantenboxen im geschlossenen und im geöffneten Zustand,
- Fig. 3c: eine Kantenbox, die einen Randbereich des Fensters und der Türinnnenwand überdeckt,
- Fig. 3d: eine Grauwertekurve im Verlauf über der Kantenbox von dem Fensterbereich in den Bereich der Türinnenwand,
- Fig. 3e: die erste Ableitung der Grauwertekurve nach dem Ort,
- Fig. 4a, b: eine seitliche Draufsicht auf einen Fahrzeuginsassen und die Beifahrertür mit Messfeldern für eine 3D-Kamera bzw. eine Skizze mit Projektionen von Messpunkten, und
- Fig. 5a, b: mit der 3D-Kamera gewonnene Bildpunkte nach einer Transformation in eine zum Fahrzeugboden koplanare Ebene.

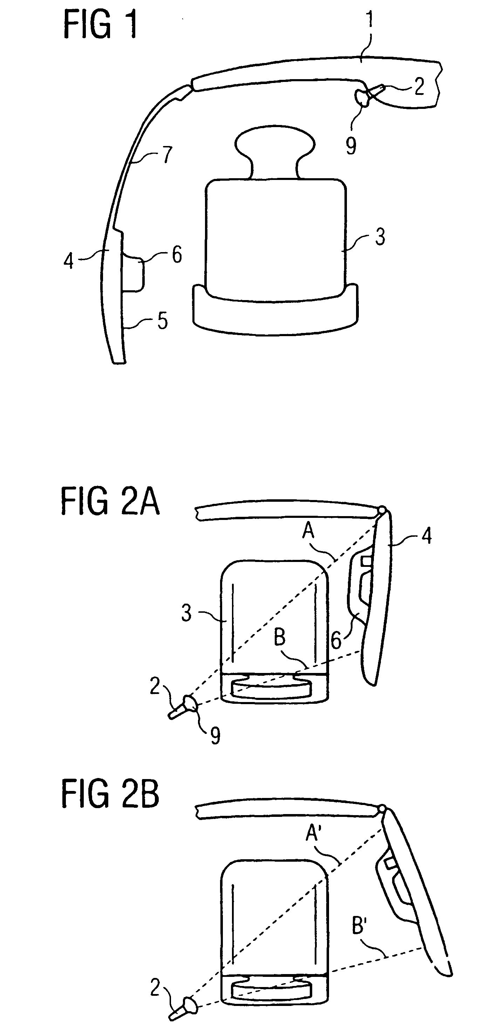

In einem Fahrzeug mit einem Dachhimmel 1 (Fig. 1; 2a, b) ist eine CCD- oder CMOS-Kamera 2 angebracht, die mit einem Weitwinkelobjektiv 9 ausgestattet ist. Die Kamera 2 ist vorzugsweise in der Fahrzeugmitte oder alternativ im Bereich des oberen Lenkholms der Karosserie derart ausgerichtet, dass ihr Bildbereich oberhalb eines Sitzes 3 eine Tür 4 sowohl im Bereich einer Türinnenwand 5 mit einem Türgriff 6 als auch ein Fenster 7 umfasst. Eine Linie A bezeichnet den Abstand zwischen der Kamera 2 und der Tür 4 im geschlossenen Zustand an einer ersten Stelle, eine Linie B den Abstand an einer zweiten Stelle. Den Linien A, B entsprechen im geöffneten Zustand Linien A', B'.

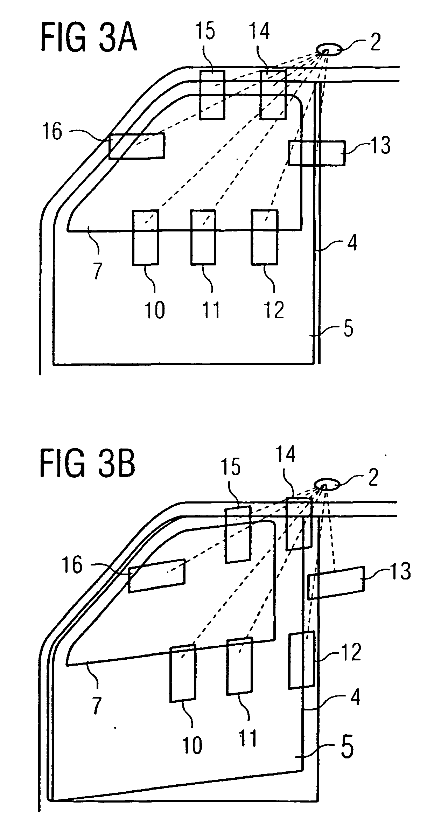

Wenn mit der Kamera 2 Grauwertbilder erfasst werden, werden um den Rahmen des Fensters 7 herum Kantenboxen 10 bis 16 (Fig. 3a, b) gelegt. Die Kantenboxen 10 bis 16 sind virtuelle Bildbereiche, die auf markante Stellen der Tür 4 mit großen Grauwertänderungen gelegt werden.

Die Kantenbox 10, die den unteren Bereich des Fensters 7 und einen Bereich der Türinnenwand 5 überdeckt, ist in y-Richtung, d. h. in Arbeitsrichtung der Kamera 2, M Pixel lang und in x-Richtung N Pixel breit. Innerhalb der Kantenbox werden neben den Grauwerten für die Türinnenwand 5, die beispielsweise grau ist, und dem Ausschnitt des Fensters 7, der hell ist auch die Farbgebung eines Türgummis 8 erkennbar, das schwarz ist.

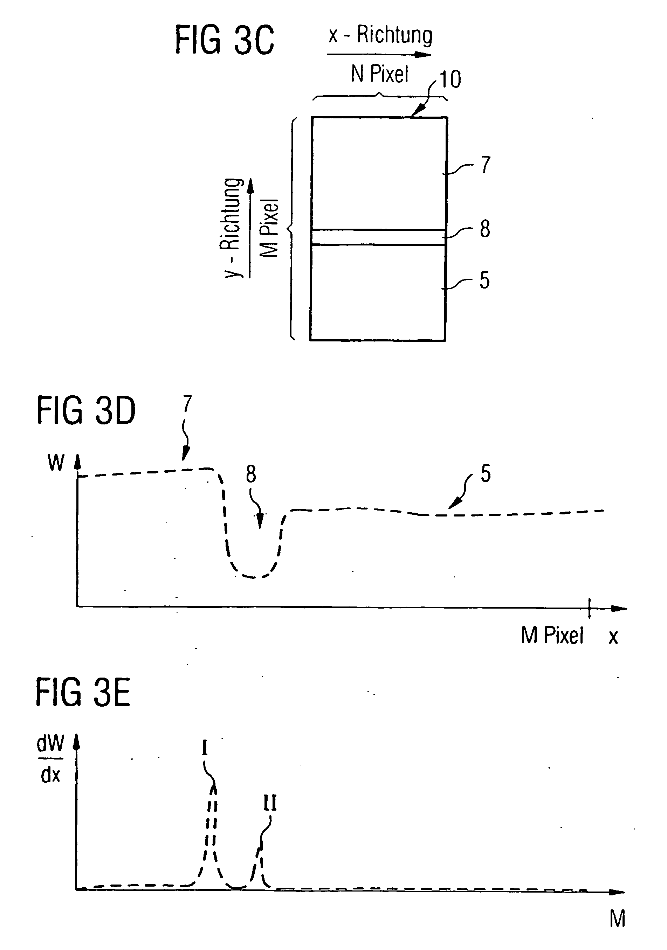

Somit ergibt sich für die drei von der Kamera 2 pixelweise abgefahrenen Bereiche innerhalb der Kantenbox 10 eine Darstellung der Grauwerte, die als Funktion der in der Arbeitsrichtung (y-Richtung in Fig. 3c) in Fig. 3d über den Pixeln M dargestellt sind. Dabei ist der Verlauf der Grauwerte des Fensters 7 (durchsichtig), des Türgummis 8 (schwarz) und der Türinnenwand 5 (grau) erkennbar.

Fig. 3e zeigt die Ableitungsfunktion der Grauwertfunktion aus Fig. 3d nach dem Ort, d. h. nach der Arbeitsrichtung (y-Richtung in Fig. 3c, x-Richtung in Fig. 3d). Dieser Verlauf wird in der Praxis mit Hilfe eines Kantenfilters gewonnen. Dabei kommen die Positionen der Kanten zwischen dem Fenster 7 und dem Türgummi 8 einerseits (Position I) und zwischen dem Türgummi 8 und der Türinnenwand 5 (Position II) andererseits zum Ausdruck. Die Orte der Kanten (Positionen I und II) sind typisch für diese Türstellung, die damit eindeutig charakterisiert ist.

Bei diesem Darstellungsverfahren wird nur sehr wenig Speicherplatz benötigt, da je Kantenbox 10 bis 16 nur die Position von zwei diagonal einander gegenüberliegenden Ecken , die Arbeitsrichtung der Kamera 2 und ein Schwellwert für die Grauwerte eingestellt werden muss. Dabei kann der Schwellwert je Kantenbox 10 bis 16 individuell unterschiedlich gewählt werden.

Aus dem Vergleich der Positionen der Kantenboxen 10 bis 16 bei geschlossener Tür 4 (Fig. 3a) und bei geöffneter Tür 4 (Fig. 3b) ergibt sich durch die Änderung der Perspektive eine Verlagerung der Kantenboxen 10 bis 16 gegenüber der Tür 4. Die Kanten der Kantenboxen 10 bis 16 ändern sich schon bei geringen Veränderungen des Öffnungswinkels der Tür 4. Damit ist auch der Winkel feststellbar, unter dem die Tür 4 geöffnet ist. Da prinzipiell Verdeckungen einzelner Kantenboxen 10 bis 16 durch Insassen des Fahrzeugs möglich sind, wird vorzugsweise eine bestimmte Mindestzahl der Kantenboxen 10 bis 16 definiert, um auch dann, wenn einzelne von ihnen verdeckt sind, aus den anderen unverdeckten, bei denen die Kantenpositionen mit den gespeicherten Kantenpositionen übereinstimmt, sichere Messergebnisse zu erhalten.

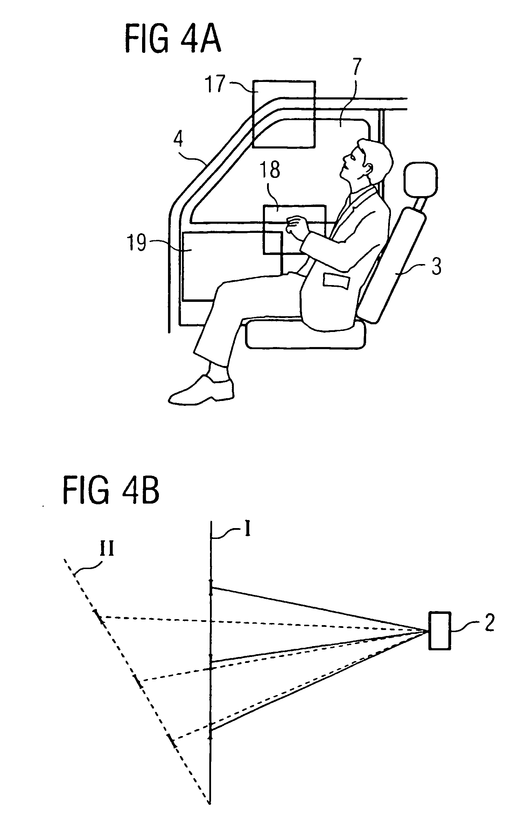

In einer anderen Ausführungsform ist die Kamera 2 als 3D-Kamera ausgebildet. In diesem Fall werden Messfelder 17 bis 19 (Fig. 4a) definiert, die Teile der Tür 4 abbilden und innerhalb deren der mittlere Abstand zu der Kamera 2 gemessen wird. Aus dem Vergleich des aktuellen Abstands zu einem gespeicherten Abstand, der beispielsweise für die geschlossene Tür 4 gemessen wurde, kann gefolgert werden, ob die Tür 4 offen oder geschlossen ist. Dabei werden die Messfelder 17 bis 19 auf eine Projektionsebene, z. B. den Fahrzeugboden, projiziert (Birdview, Vogelperspektive). Aus der relativen Änderung der mittleren Abstände der Messfelder 17 bis 19 zueinander bei geschlossener Tür 4 (Fig. 4b) (Position I) und bei geöffneter Tür 4 (Position II) wird dann der Öffnungswinkel der Tür 4 bestimmt.

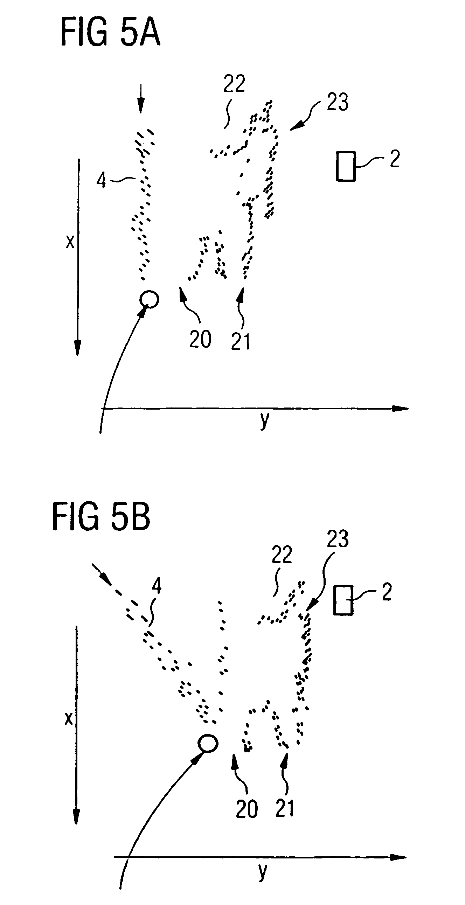

In einem weiteren Verfahren (Fig. 5a, b) werden sämtliche Messpunkte auf eine zum Fahrzeugboden koplanare Ebene projiziert. Dadurch ergibt sich entlang einer y-Achse (Achse quer zur Fahrrichtung des Fahrzeugs) eine charakteristische Häufung von Punkten, deren Position entlang der Längsachse der jeweiligen Punktwolke Positionen von Objekten wiedergeben. So gibt eine Häufung von Punkten die Position der Tür 4 im geschlossenen Zustand wieder (Fig. 5a), während Positionen 20, 21 die Beine eines Insassen, Position 22 den Körper und die Rückenlehne des Sitzes 3 repräsentieren.

Im geöffneten Zustand (Fig. 5b) hat die Punktwolke, die die Tür 4 darstellt, ihre Position verändert, während alle anderen Punktwolken 20 bis 22 im wesentlichen dieselben Positionen haben. Die Richtung der Bewegung der Punktwolke für die Tür 4 wird nun entweder mittels eines Türmodells unter Einbeziehung der bekannten Position des Drehpunkts der Tür 4 oder modellfrei unter Einbeziehung von aus der Literatur bekannten Transformationen, z. B. der Hough-Transformation, gesucht (vgl. K. R. Castleman, Prentice Hall; P. Haberäcker, Carl Hausen Verlag München, Wien; B. Jähne, H. Haußecker, Computer Vision and Applications, Academic Press).

## Patentansprüche

1. Verfahren zur Ermittlung der Position eines Objekts innerhalb eines mit einer Tür (4) ausgestatteten Fahrzeuginnenraums, bei dem eine Bildfolge mit einer Kamera (2) aufgenommen wird und durch elektronische Auswertung der Bilder der Bildfolge die aktuelle Position des Objekts berechnet wird, wobei durch Vergleich eines aktuell aufgenommenen Bildes mit einem vorher gespeicherten Bild ein Differenzbild erzeugt wird und die Berechnung der Position des Objekts auf der Basis des Differenzbilds erfolgt,
**dadurch gekennzeichnet,**
**dass** die Kamera (2) Bilder der Tür (4) aufnimmt, dass die Bilder der Tür (4) ausgewertet werden und dass auf Basis des Differenzbildes zwischen dem geschlossenen Zustand und dem geöffneten Zustand der Öffnungszustand der Tür (4) gewonnen wird.

2. Verfahren nach Anspruch 1, **dadurch gekennzeichnet, dass** aus dem Differenzbild der Öffnungswinkel der Tür (4) gewonnen wird.

3. Verfahren nach Anspruch 1 oder 2, **dadurch gekennzeichnet, dass** die Kamera (2) in Abhängigkeit vom erkannten Öffnungszustand ein Signal erzeugt und dieses einem Überwachungssystem zuführt, das aufgrund des Signals eine Sicherheitseinrichtung zum Schutz von Fahrzeuginsassen ein- oder ausschaltet.

4. Verfahren nach einem der vorherigen Ansprüche,
**dadurch gekennzeichnet,**
**dass** die Kamera (2) den Öffnungszustand eines Fensters (7) misst, dass sie in Abhängigkeit vom erkannten Öffnungszustand ein Signal erzeugt und dieses einem Überwachungssystem zuführt.

5. Verfahren nach Anspruch 4, **dadurch gekennzeichnet, dass** die Kamera (2), wenn sie ein Objekt im Bereich des geöffneten Fensters (7) erkennt, ein Signal an das Überwachungssystem abgibt, aufgrund dessen das Überwachungssystem eine Sperre initialisiert, die ein Verschließen des geöffneten Fensters (7) verhindert.

6. Verfahren nach einem der Ansprüche 1 bis 5, **dadurch gekennzeichnet, dass** der Öffnungszustand der Tür (4) bzw. des Fensters (7) aus Grauwertbildern gewonnen wird.

7. Verfahren nach Anspruch 6, **dadurch gekennzeichnet, dass** für die Gewinnung der Grauwertbilder virtuelle Bildbereiche festgelegt werden, in denen bei Änderung des Öffnungszustandes der Tür (4) bzw. des Fensters (7) Änderungen der Grauwerte erwartet werden.

8. Verfahren nach Anspruch 7, **dadurch gekennzeichnet, dass** je gewonnenem Bild eine Grauwertkurve als Funktion des Ortes nach dem Ort differenziert wird, dass das Ergebnis der Differentiation jeweils gespeichert wird und dass aus dem Vergleich der gespeicherten Daten der Öffnungszustand ermittelt wird.

9. Verfahren nach einem der Ansprüche 1 bis 5, **dadurch gekennzeichnet, dass** der Öffnungszustand der Tür (4) bzw. des Fensters (7) aus dreidimensionalen Entfernungsbildern der Kamera (2) gewonnen wird.

10. Verfahren nach Anspruch 9, **dadurch gekennzeichnet, dass** sämtliche Entfernungspunkte nach Transformation in das Fahrzeugsystem auf auf den Fahrzeugboden oder auf eine Ebene parallel zum Fahrzeugboden projiziert werden, dass die projizierten Bilder jeweils gespeichert werden und dass aus dem Vergleich der gespeicherten Daten der Öffnungszustand ermittelt wird.

11. Verfahren nach Anspruch 9, **dadurch gekennzeichnet, dass** Punktwolken von Gegenständen, insbesondere der Tür (4) oder des Fensters (7), bestimmt werden und dass aus einem Vergleich der gespeicherten Daten der Öffnungszustand ermittelt wird.

## Claims

1. Method for detecting the position of an object within the interior of a vehicle equipped with a door (4), in which method a sequence of images is recorded by means of a camera (2) and the actual position of the object calculated by electronically evaluating the images of the sequence of images, wherein a differential image is generated by comparing a currently recorded image with a previously stored image, and the position of the object is calculated on the basis of the differential image,
**characterised in that**
the camera (2) records images of the door (4), the images of the door (4) are evaluated and the open state of the door (4) is established on the basis of the differential image between the closed state and the opened state.

2. Method according to claim 1,
**characterised in that**
the opening angle of the door (4) is established from the differential image.

3. Method according to claim 1 or claim 2,
**characterised in that**
the camera (2) generates a signal depending on the open state detected and feeds this signal to a monitoring system which, on the basis of the signal, switches on or off a security device for the protection of vehicle occupants.

4. Method according to one of the preceding claims
**characterised in that**
the camera (2) measures the open state of a window (7) and **in that** said camera generates a signal depending on the open state detected and feeds said signal to a monitoring system.

5. Method according to claim 4,
**characterised in that**
the camera (2) emits a signal to the monitoring system if it detects an object within the range of the opened window (7), on the basis of which signal the monitoring system initialises a lockout which prevents the opened window (7) from being closed.

6. Method according to any one of claims 1 to 5,
**characterised in that**
the open state of the door (4) and/or of the window (7) is established from gray-scale images.

7. Method according to claim 6,
**characterised in that**
for the purposes of establishing the gray-scale images virtual image areas are defined, in which image areas changes in the gray-scale values are expected if there is a change in the open state of the door (4) and/or of the window (7).

8. Method according to claim 7,
**characterised in that**
for each image established a curve of gray-scale values as a function of the location is differentiated according to the location, **in that** the result of the differentiation is stored in each case and **in that** the open state is determined from comparison of the stored data.

9. Method according to any one of claims 1 to 5,
**characterised in that**
the open state of the door (4) and/or of the window (7) is established from three-dimensional distance images of the camera (2).

10. Method according to claim 9,
**characterised in that**
after transformation into the vehicle system all distance points are projected onto the vehicle floor or onto a plane parallel to the vehicle floor, **in that** the projected images are stored in each case and **in that** the open state is determined from comparison of the stored data.

11. Method according to claim 9,
**characterised in that**
point clouds of objects, in particular of the door (4) or of the window (7), are defined and **in that** the open state is determined from comparison of the stored data.

## Revendications

1. Procédé pour déterminer la position d'un objet se trouvant à l'intérieur d'un véhicule équipé d'une portière (4), dans lequel une séquence d'images est photographiée à l'aide d'une caméra (2) et la position actuelle de l'objet est déterminée par un dépouillement électronique des images de la séquence d'images, une image différentielle étant produite par une comparaison d'une image actuellement photographiée avec une image antérieurement enregistrée et le calcul de la position de l'objet étant effectué sur la base de l'image différentielle,
**caractérisé en ce que** la caméra (2) prend des images de la portière (4), que les images de la portière (4) sont évaluées, et l'état d'ouverture de la portière (4) est obtenu sur la base de l'image différentielle entre l'état fermé et l'état ouvert.

2. Procédé selon la revendication 1, **caractérisé en ce que** l'angle d'ouverture de la portière (4) est obtenu à partir de l'image différentielle.

3. Procédé selon la revendication 1 ou 2, **caractérisé en ce que** la caméra (2) génère un signal en fonction de l'angle d'ouverture reconnu et transmet ce signal à un système de surveillance qui enclenche ou déclenche, sur la base du signal, un dispositif de sécurité pour la protection des occupants du véhicule.

4. Procédé selon l'une des revendications précédentes, **caractérisé en ce que** la caméra (2) mesure l'état d'ouverture d'une fenêtre (7), qu'elle génère un signal en fonction de l'état d'ouverture reconnu, et qu'elle transmet ce signal à un système de surveillance.

5. Procédé selon la revendication 4, **caractérisé en ce que** la caméra (2) transmet, lorsqu'elle reconnaît un objet dans la région de la fenêtre (7) ouverte, un signal au système de surveillance sur la base duquel la système de surveillance initialise un blocage qui empêche la fermeture de la fenêtre (7) ouverte.

6. Procédé selon l'une des revendications 1 à 5, **caractérisé en ce que** l'état d'ouverture de la portière (4) ou, respectivement, de la fenêtre (7), est obtenu à partir des images à valeurs de gris.

7. Procédé selon la revendication 6, **caractérisé en ce que**, pour l'obtention des images à valeurs de gris, des zones d'image virtuelles sont déterminées dans lesquelles on escompte des modifications des valeurs de gris lors d'un changement de l'état d'ouverture de la portière (4) ou, respectivement, de la fenêtre (7).

8. Procédé selon la revendication 7, **caractérisé en ce qu'**une courbe des valeurs de gris en fonction du lieu est dérivée par rapport au lieu pour chaque image obtenue, le résultat de chaque dérivation est enregistré, et l'état d'ouverture est déterminé à partir de la comparaison des données enregistrées.

9. Procédé selon l'une des revendications 1 à 5, **caractérisé en ce que** l'angle d'ouverture de la portière (4) ou, respectivement, de la fenêtre (7) est obtenu à partir des images de distance tridimensionnelles de la caméra (2).

10. Procédé selon la revendication 9, **caractérisé en ce que** tous les points de distance sont projetés sur le plancher du véhicule ou sur un plan parallèle au plancher du véhicule après leur transformation dans le système du véhicule, que toutes les images projetées sont enregistrées, et que l'état d'ouverture est déterminé à partir de la comparaison des données enregistrées.

11. Procédé selon la revendication 9, **caractérisé en ce que** des nuages de points d'objets, en particulier de la portière (4) ou de la fenêtre (7), sont déterminés, et que l'état d'ouverture est déterminé à partir d'une comparaison des données enregistrées.
